# EUROPEAN PATENT SPECIFICATION

(11) **EP 2 310 579 B1**
(45) Date of publication and mention of the grant of the patent: **18.10.2017**
(21) Application number: 09785761.9
(22) Date of filing: 17.07.2009
(51) Int. Cl.: E03B 3/11, E03B 3/20, E21B 7/18, E21B 43/08, E21B 43/30

(54) **RADIAL COLLECTOR WELL AND METHOD FOR CONSTRUCTING OR IMPROVING RADIAL COLLECTOR WELLS**
HORIZONTALFILTERBRUNNEN UND VERFAHREN ZUR KONSTRUKTION ODER VERBESSERUNG VON HORIZONTALFILTERBRUNNEN
PUITS À DRAINS RAYONNANTS ET PROCÉDÉ DE CONSTRUCTION OU D'AMÉLIORATION DES PUITS À DRAINS RAYONNANTS

(30) Priority: 28.07.2008 HU 0800469
(43) Date of publication of application: 20.04.2011
(73) Proprietor: Fövárosi, Vízmüvek Zrt., 1134 Budapest (HU)
(72) Inventor: CSÓKA, Gyula, H-1155 Budapest (HU); BOZÓKI, László, H-2015 Szigetmonostor (HU)
(74) Representative: Mészarosné Donusz, Katalin
(86) International application number: PCT/HU2009/000060
(87) International publication number: WO 2010/013075

(56) References cited:
- FR-A- 2 330 807
- US-A- 2 783 972
- US-A- 3 177 955

## Description

The invention relates to a radial collector well and a method for constructing or improving radial collector wells. The invention can be applied primarily for obtaining drinking water.

Sand and gravel terraces are commonly occurring formations along river beds and in natural subsurface water reservoirs These formations are generated from the bed load sediment of natural waters, and, since water filtered through layers of gravel or sand is purified to such an extent that it is potable without any further treatment, they are particularly suitable for extracting drinking water. Natural aquifers can be tapped utilizing wells, of which two major types have become widespread. One of the widely used well types is the so called shaft well or pipe well. Pipe wells have a vertical-axis, perforated metal pipe that is sunk through gravel and sand layers such that it reaches down to the confining layer. Water flowing into the pipe through the perforations is removed from the well by a pump or by gravitational means. Such a solution is described in US patent No. 4,182,414.

The other commonly applied water extraction system is the radial collector well. In a radial collector well horizontally laid filter pipes - so-called "collectors" (or "laterals") - are jacked into the gravel or sand layer from the vertical well shaft. Collectors are usually 20-40 m long, but in specific cases collector length may rise to 100 m. Collectors are made up of collector segments (perforated pipe segments) that are jacked into the aquifer one after the other under high pressure and welded together. Radial collector wells usually have 5 to 10 collectors. The best known variant of this widely used type of well is the Ranney radial collector well.

Although radial collector wells have been widespread for many decades, in certain fine-grained sandy or gravel soils the construction and operation of conventional radial collector wells may become difficult. Difficulties may be caused by sand flowing into the well together with water. Also, soil failure or soil slumping may occur, and the buildup of a natural filter structure in the soil may also prove difficult. These factors all diminish water extraction efficiency and in specific cases may make water extraction impossible.

There are a number of options for keeping out fine-grained solid material. One of these solutions involves disposing filter means around the perforated pipe, thereby stopping solid material from entering the interior of the well. Such a solution is disclosed in the document HU 182,540. The application of filter means, however, has the disadvantage that the filter is costly to install and has to be maintained regularly. A further drawback is that filter means deteriorate water extraction efficiency.

Another solution for keeping out solid material is choosing the dimensions of perforations in such a way that fine-grained sand is prevented from flowing into the well. However, decreasing perforation size and consequently, total free slot size value, causes a drop in water yield.

Patent specification DE 24 28 987 A1 concerns a perforated filter pipe arrangement for wells. The filter pipe according to the invention has axially alternating perforated and non-perforated sections, where the perforated sections have so-called "bridge perforation". Bridge perforation provides sufficiently high free slot surface and consequently, sufficiently high water yield, even if the slots are thinner than conventionally applied perforation slots, whereas the smaller-sized slots help prevent solid material from entering the pipe. The invention disclosed in the document DE 24 28 987 A1 may be suitably utilized as a vertical filter pipe in pipe wells. However, it cannot be utilized as a horizontal collector in radial collector wells constructed with conventional jacking means and methods.

The horizontal collectors (or "laterals") of radial collector wells are driven applying the known Ranney method, by pipe jacking. According to this method the perforated collector segments are cut to size, are lowered into the vertical well shaft, and are jacked under high pressure into the filter layer (located above the confining layer) in a horizontal direction. After the first collector segment has been driven into the filter layer, the next one is welded to it and the above steps are repeated until the collector reaches its desired length. Collectors are made from slot-perforated plain pipe. Water enters the interior of the collectors through the slot perforation and flows into the well shaft. Collectors may be arranged in a single plane or in multiple planes, with one or more (even 5-10) collectors being disposed in each plane. Before constructing a radial collector well, surveys of soil mechanical and hydrological conditions should always be carried out. A suitable hydrogeological environment for such a well is provided by a collection area providing uninterrupted water supply, and a filter layer having favourable grain size and grain structure. In fine-grained sandy soils the conventional slot-perforated collectors can be driven relatively easily but a big amount of solid material can flow into the well together with water through the slots. Also, the buildup of filter structure around the collectors is slow and it may be difficult to clean the collectors in a regular fashion. Reducing the slot size of the collectors to keep out as much sand as possible, however, results in a reduced water yield. Known art bridge perforated pipes applied in conventional pipe wells are also not suitable for application with this technology because the bridge perforation collapses under the frictional and jacking forces occurring during the jacking operation. This kind of bridge perforation can be learned from the patent document FR 2 330 807, which discloses the features of the preambles of independent method-claims 1 and 2. The objective of our invention is to provide a method for constructing or improving radial collector wells that is capable of driving collectors into finer-grained layers such that the water yield of the well does not decrease, while the finer-grained solid particles may be retained in the filter layer.

Our invention is based on the recognition that, in case the collectors are made from bridge-perforated collector segments there is a sufficiently large flow-through surface capable of letting through a great amount of water, while the slot height of the bridge perforations is low enough to be able to keep out finer-grained solid material (sand, sandy gravel) from the collector and the well shaft. We have also recognised that bridge-perforated collector segments can be driven into the filter layer undamaged (without the collapse of bridge perforations) only if the forces arising from friction and layer pressure are significantly reduced.

An object of the invention is a method for constructing a radial collector well, comprising the steps of sinking a well shaft in a direction perpendicular to the soil surface such that the well shaft reaches the confining layer, jacking collectors or at least one collector into the filter layer in a direction perpendicular to the well shaft, where the collectors are disposed in at least one plane, and where the collectors are produced by sequentially jacking and interconnecting collector segments. The object of the invention is a method for improving a radial collector well, comprising the steps of jacking collectors or at least one collector from the well shaft of the existing well into the filter layer in a direction perpendicular to the well shaft, where the are disposed in at least one plane, and where the collectors are produced by sequentially jacking and interconnecting collector segments. The essential feature of the methods is that the radial collector well is constructed or improved by loosening and dislodging the filter layer utilizing high-pressure water jet having a pressure set between 200-400 bars, wherein the filter layer is loosened and dislodged in the vicinity of the collectors prior to or simultaneously with collector jacking, bringing the resulting slurry into the well shaft, sequentially jacking the collector segments made from metal sheets having bridge perforations into the loosened filter layer, and connecting the collector segments to each other with sleeve joints.

The invention is explained in greater detail with reference to the attached drawings, where
Fig. 1 shows the schematic cross sectional view of a radial collector well,
Fig. 2 shows the axonometric view of a conventional collector segment,
Fig. 3 is the axonometric view of a bridge-perforated collector segment configured according to the present invention, and
Fig. 4 shows a sectional view taken along line IV-IV of Fig 3.

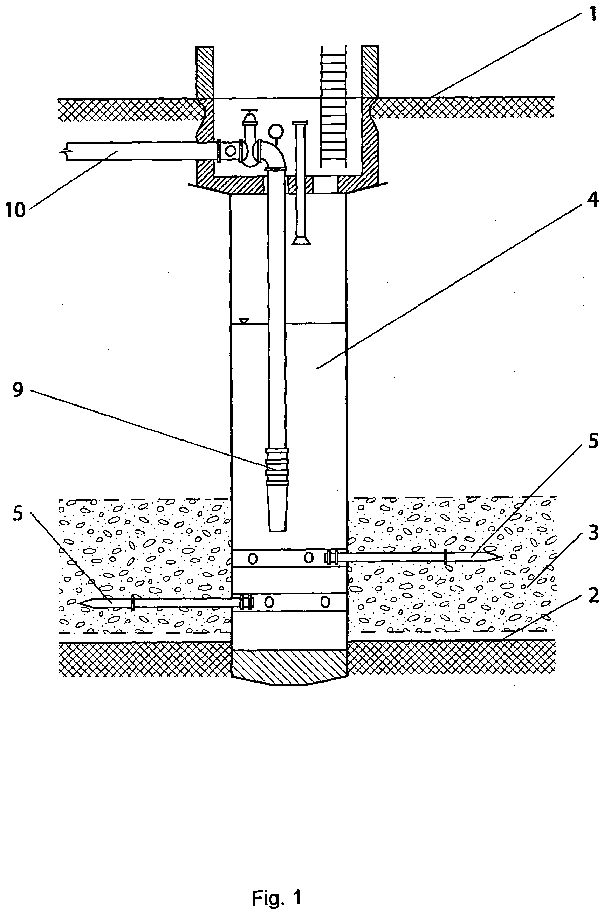

Fig. 1 shows the schematic view of the structural arrangement of the radial collector well according to the invention. The well comprises a well shaft 4 arranged vertically, or in other words, substantially perpendicularly to the soil surface. The well shaft 4 is sunk into the ground such that it reaches the confining layer 2. Collectors 5 are jacked into the filter layer 3 located above the confining layer 2. The filter layer 3 is either made up of gravel, sandy gravel, or sand only. Water enters the interior of the collectors 5 from the filter layer 3 through the perforated wall of the collectors 5, where it flows into the well shaft 4. A pump 9 is applied for extracting water from the well shaft 4 and feeding it to the main pipeline 10.

The collectors 5 are assembled from collector segments 6. The collector segments 6 are cut to a uniform size so as to fit easily into the well shaft 4 The collector segments 6, jacked into the filter layer one after the other, are interconnected applying conventional sleeve joints.

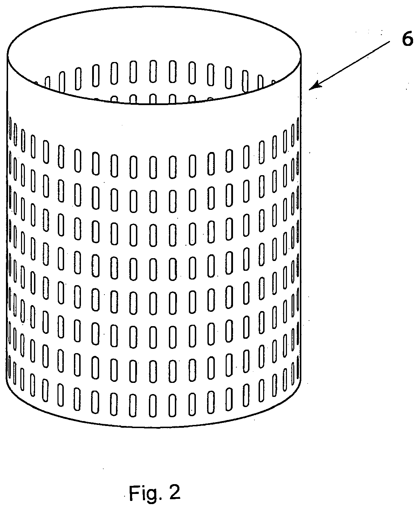

The arrangement of the collector segment 6 of a conventional radial collector well is illustrated in Fig. 2. The collector segment 6 is implemented as a metal pipe having conventional slot perforation. Parameters of such a material are specified by the DIN 14309 standard.

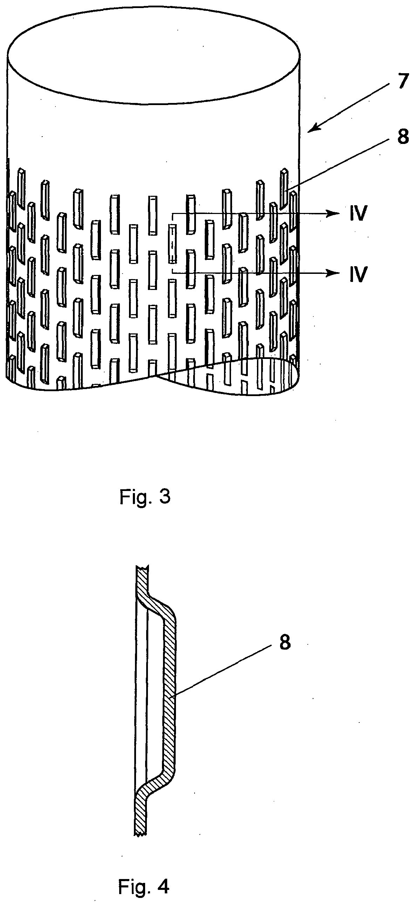

Figs. 3 and 4, show, respectively, the full view and a part detail view of the collector segment 7 according to the invention. The collector segment 7 has bridge perforation 8. The DIN 14309 standard also specifies the parameters of bridge perforated sheet metal. In Table 1 a comparison is shown between collector segments made from conventional slot-perforated sheet and from bridge-perforated sheet metal, with special regard to the size and water flow-through capacity of the segments.

**Table 1.**

| Collector segment type | Collector segment material | Outer diameter (mm) | Wall thickness (mm) | Slot size (mm) | Bridge size (mm) | Free slot surface | Water flow-through capacity (l/sec/m) |
|---|---|---|---|---|---|---|---|
| Conventional slot-perforated | DIN 14309 | 219 | 6 | 6x35 | - | 23 | 4.2 |
| Bridge-perforated | DIN 14309 | 219 | 5 | - | 3x26.5 | 23.1 | 4.7 |

As it is suggested by Table 1 data, the bridge-perforated collector segment has higher water flow-through capacity while it has the same outer diameter, substantially the same free slot surface, and lower wall thickness than the conventional, bridge-perforated collector segment. It is also readily apparent from the data that the size of the flow through-openings of the bridge-perforated collector segment (determined by the height of the perforation bridges) is significantly smaller than the slot size of the conventional slot-perforated collector, making the bridge-perforated segment able to keep out much smaller solid particles than its conventional counterpart.

A radial collector well was constructed applying the method according to the invention. First, a well shaft 4 was sunk in a vertical direction (a direction substantially perpendicular to the soil surface) such that the shaft 4 reached the confining layer 2. The well shaft 4 was constructed applying conventional methods. A total of 10 horizontally oriented collectors 5 were jacked into the filter layer 3 at two planes, with 5 collectors 5 being arranged at each plane. For loosening and dislodging the filter layer 3 in the vicinity of the collector bores both prior to and simultaneously with the jacking operation, high-pressure water was fed into the cutting head of the jacking equipment applied for driving the collectors 5 into the filter layer 3. This step of the method was applied so as to loosen the filter layer in the vicinity of the collector 5 to such an extent that forces acting on the collector segments 7 could be minimised, which made it possible to avoid the collapse of bridge perforations 8 during the jacking operation. The resulting slurry was brought into the well shaft 4 and was removed utilizing a pump 9. Collector segments 7 were interconnected with sleeve joints, thereby maintaining the horizontal orientation of the collectors 5 to the extent necessary for balancing the forces acting thereon.

A further method according to the invention was applied for improving an existing radial collector well. The well in question had been constructed utilizing conventional methods for jacking collector pipes. The collectors consisted of conventional slot-perforated collector segments. The well had been operating for 20 years in an aquifer with mixed grain size, and had average water yield. The well shaft had two free connection pieces available for connecting new collectors. We selected a bridge-perforated metal pipe having a bridge height of 2 mm and slot-opening size of 60 x 80 mm for producing the new collectors. The pipe was cut into 1-metre segments and was jacked into the filter layer. The new collectors had a total length of 30 m each. Utilizing the method according to the invention the collectors could be jacked into the filter layer without collapsing. Water yield measurements indicated that the new collectors had slightly better water yield capacity than the old ones.

The invention has the advantage over prior art that collector wells may be constructed in fine-grained layers utilizing a simple method, and that existing wells may be improved without necessarily applying a separate filter element for keeping out sand or sandy gravel.

### List of reference numerals

- 1: soil surface
- 2: confining layer
- 3: filter layer
- 4: well shaft
- 5: collector
- 6: collector segment
- 7: collector segment
- 8: bridge perforation
- 9: pump
- 10: main pipeline

## Claims

1. Method for constructing a radial collectors well, comprising the steps of sinking a well shaft (4) in a direction perpendicular to the soil surface (1) such that the well shaft (4) reaches the confining layer (2), jacking collectors (5) or at least one collector (5) from the well shaft (4) into the filter layer (3) in a direction perpendicular to the well shaft (4), where the collectors (5) are or the at least one collector (5) is disposed in at least one plane, and where the collectors (5) are or the at least one collector (5) is produced by sequentially jacking and interconnecting collector segments (6), where prior to or simultaneously with collector (5) jacking the filter layer (3) is loosened and dislodged in the vicinity of the collectors (5) or the at least one collector (5), the produced slurry is brought into the well shaft (4), the collector segments (7) having bridge perforations (8) are sequentially jacked into the loosened filter layer (3), and the collector segments (7) are connected to each other with sleeve joints, **characterised by** that the filter layer (3) is loosened and dislodged utilizing high-pressure water jet, the high-pressure water jet having a pressure set between 200-400 bars, and by that the collector segments (7) are made from metal sheets.

2. Method for improving a radial collector well, comprising the steps of jacking collectors or at least one collector (5) from the well shaft (4) of the existing well into the filter layer (3) in a direction perpendicular to the well shaft (4), where the collectors (5) are or the at least one collector (5) is disposed in at least one plane, and where the collectors (5) are or the at least one collector (5) is produced by sequentially jacking and interconnecting collector segments (6), where prior to or simultaneously with collector (5) jacking the filter layer (3) is loosened and dislodged in the vicinity of the collectors (5) or the at least one collector (5), the resulting slurry is brought into the well shaft (4), the collector segments (7) having bridge perforations (8) are sequentially jacked into the loosened filter layer (3), and the collector segments (7) are connected to each other with sleeve joints, **characterised by** that the filter layer (3) is loosened and dislodged utilizing high-pressure water jet, the high-pressure water jet having a pressure set between 200-400 bars, and by that the collector segments (7) are made from metal sheets.

## Patentansprüche

1. Verfahren zum Bauen eines Horizontalfilterbrunnens, umfassend die Schritte eines Bohrens eines Brunnenschachtes (4) in einer zu der Bodenoberfläche (1) lotrechten Richtung, so dass der Brunnenschacht (4) die undurchlässige Schicht (2) erreicht, Vortreiben von Sammlern (5) oder wenigstens eines Sammlers (5) von dem Brunnenschacht (4) in die Filterschicht (3) in einer zu dem Brunnenschacht (4) lotrechten Richtung, wobei die Sammler (5) oder der wenigstens eine Sammler (5) in wenigstens einer Ebene angeordnet werden bzw. wird, und wobei die Sammler (5) oder der wenigstens eine Sammler (5) durch aufeinander folgendes Vortreiben und Verbinden von Sammlerabschnitten (6) erzeugt werden bzw. wird, wobei vor oder gleichzeitig mit einem Sammler-(5)-Vortreiben die Filterschicht (3) in der Nähe der Sammler (5) oder des wenigstens einen Sammlers (5) gelöst und entfernt wird, der erzeugte Schlamm in den Brunnenschacht (4) gebracht wird, die Sammlerabschnitte (7) Stegperforierungen (8) aufweisen, die abschnittsweise in die gelockerte Filterschicht getrieben werden, und die Sammlerabschnitte (7) miteinander mit Muffenverbindungen verbunden werden, **dadurch gekennzeichnet, dass** die Filterschicht (3) durch Verwendung eines Hochdruckwasserstrahls gelockert und entfernt wird, wobei der Hochdruckwasserstrahl einen Druck aufweist, der zwischen 200 - 400 bar eingestellt ist, und dadurch, dass die Sammlerabschnitte (7) aus Blechen hergestellt sind.

2. Verfahren zum Verbessern eines Horizontalfilterbrunnens, umfassend die Schritte eines Vortreibens von Sammlern oder wenigstens eines Sammlers (5) von dem Brunnenschacht (4) eines existierenden Brunnens in die Filterschicht (3) in einer zu dem Brunnenschacht (4) lotrechten Richtung, wobei die Sammler (5) oder wenigstens eine Sammler (5) durch aufeinander folgendes Vortreiben und Verbinden von Sammlerabschnitten (6) erzeugt werden, wobei vor oder gleichzeitig mit einem Sammler-(5)-Vortreiben die Filterschicht (3) in der Nähe der Sammler (5) oder des wenigstens einen Sammlers (5) gelöst und entfernt wird, der resultierende Schlamm in den Brunnenschacht (4) gebracht wird, wobei die Sammlerabschnitte (7) Stegperforationen (8) aufweisen, die abschnittsweise in die gelöste Filterschicht (3) vorgetrieben werden, und die Sammlerabschnitte (7) miteinander mit Muffenverbindungen verbunden sind, **dadurch gekennzeichnet, dass** die Filterschicht (3) durch Verwendung eines Hochdruckwasserstrahls gelockert und entfernt wird, wobei der Hochdruckwasserstrahl einen Druck aufweist, der zwischen 200 - 400 bar eingestellt ist, und dadurch, dass die Sammlerabschnitte (7) aus Blechen hergestellt sind.

## Revendications

1. Procédé de construction d'un puits collecteur radial, comprenant les étapes d'abaissement d'un forage de puits (4) dans une direction perpendiculaire à la surface du sol (1) de sorte que le forage de puits (4) atteigne la couche de confinement (2), de levage de collecteurs (5) ou d'au moins un collecteur (5) du forage de puits (4) jusque dans la couche de filtre (3) dans une direction perpendiculaire au forage de puits (4), où les collecteurs (5) sont ou l'au moins un collecteur (5) est disposé(s) dans au moins un plan, et où les collecteurs (5) sont ou l'au moins un collecteur (5) est produit(s) par levage et interconnexion séquentiels de segments collecteurs (6), où avant ou simultanément au levage des collecteurs (5), la couche de filtre (3) est ameublie et déplacée à proximité des collecteurs (5) ou de l'au moins un collecteur (5), la boue produite est amenée dans le forage de puits (4), les segments collecteurs (7) présentant des perforations de pont (8) sont levés séquentiellement dans la couche de filtre (3) ameublie, et les segments collecteurs (7) sont connectés l'un à l'autre avec des joints à manchon, **caractérisé en ce que** la couche de filtre (3) est ameublie et déplacée en utilisant un jet d'eau haute pression, le jet d'eau haute pression présentant une pression réglée entre 200 à 400 bars, et **en ce que** les segments collecteurs (7) sont réalisés en feuilles métalliques.

2. Procédé d'amélioration d'un puits collecteur radial, comprenant les étapes de levage de collecteurs ou d'au moins un collecteur (5) du forage de puits (4) du puits existant dans la couche de filtre (3) dans une direction perpendiculaire au forage de puits (4), où les collecteurs (5) sont ou l'au moins un collecteur (5) est disposé(s) dans au moins un plan, et où les collecteurs (5) sont ou l'au moins un collecteur (5) est produit(s) par levage et interconnexion séquentiels de segments collecteurs (6), où avant ou simultanément au levage de collecteurs (5), la couche de filtre (3) est ameublie et déplacée à proximité des collecteurs (5) ou de l'au moins un collecteur (5), la boue résultante est amenée dans le forage de puits (4), les segments collecteurs (7) présentant des perforations de pont (8) sont levés séquentiellement dans la couche de filtre (3) ameublie, et les segments collecteurs (7) sont connectés l'un à l'autre avec des joints à manchon, **caractérisé en ce que** la couche de filtre (3) est ameublie et déplacée en utilisant un jet d'eau haute pression, le jet d'eau haute pression présentant une pression réglée entre 200 à 400 bars, et **en ce que** les segments collecteurs (7) sont réalisés en feuilles métalliques.
